Europäisches Patentamt

European Patent Office

Office européen des brevets

(19)

(11) EP 0 100 700 B2

(12) NOUVEAU FASCICULE DE BREVET EUROPEEN

(45) Date de publication et mention de la décision concernant l'opposition:
**07.08.1996 Bulletin 1996/32**

(45) Mention de la délivrance du brevet:
**04.09.1985 Bulletin 1985/36**

(21) Numéro de dépôt: **83401339.3**

(22) Date de dépôt: **29.06.1983**

(51) Int Cl.$^6$: **C01B 33/32**, C11D 3/08

(54) **Nouveaux granules de métasilicate de sodium, leur procédé d'obtention et leur utilisation dans les compositions détergentes pour lave-vaisselle**

Natriummetasilikat-Granulate, Verfahren zu deren Herstellung und deren Verwendung in Reinigungsmittelzusammensetzungen für Geschirrspülmaschinen

Sodium metasilicate granulates, process for their manufacture and their use in detergent compositions for dish-washing machines

(84) Etats contractants désignés:
**AT BE CH DE FR GB IT LI LU NL SE**

(30) Priorité: **09.07.1982 FR 8212068**

(43) Date de publication de la demande:
**15.02.1984 Bulletin 1984/07**

(73) Titulaire: **RHONE-POULENC CHIMIE**
**92408 Courbevoie Cédex (FR)**

(72) Inventeurs:
- **Godard, Gerard**
  **F-02400 Chateau Thierry (FR)**
- **Joubert, Daniel**
  **F-01600 Trevoux (FR)**
- **Gagnaire, Philippe**
  **F-02310 Charly s/ Marne (FR)**

(74) Mandataire: **Eggert, Hans-Gunther, Dr.**
**Räderscheidtstrasse 1**
**50935 Köln (DE)**

(56) Documents cités:
**DE-A- 2 744 753**    **DE-B- 2 806 161**
**DE-C- 1 567 572**    **DE-C- 2 350 822**
**FR-A- 2 403 974**    **GB-A- 1 149 859**
**US-A- 3 208 822**    **US-A- 3 377 134**
**US-A- 3 868 227**    **US-A- 4 253 849**

- **J.Chem.Thermodynamics 1976, 8, 277-282**

Remarques:
Le dossier contient des informations techniques présentées postérieurement au dépôt de la demande et ne figurant pas dans le présent fascicule.

**Description**

La présente invention a pour objet de nouveaux granulés de métasilicate de sodium, leur procédé d'obtention ainsi que leur utilisation en détergence et plus particulièrement dans les compositions détergentes destinées au nettoyage de la vaisselle.

Le métasilicate de sodium est un produit d'usage courant qui trouve notamment une application importante dans les compositions détergentes pour lave-vaisselle auxquelles il apporte l'alcalinité nécessaire tout en se révélant moins agressif que d'autres sels alcalins: notamment, malgré son alcalinité, il est peu corrosif à l'encontre du verre et des métaux légers tels que l'aluminium.

Par ailleurs, il présente l'avantage de posséder lui-même des propriétés détergentes intéressantes, telles que pouvoir émulsionnant et pouvoir antiredéposition.

Aussi, est-il fréquemment utilisé dans des compositions détergentes destinées au nettoyage de la vaisselle. Or, à l'heure actuelle, les compositions détergentes solides pour laver la vaisselle en machine automatique sont fabriquées selon la technique dite du «mélange à sec» si bien que les caractéristiques physico-chimiques desdites compositions correspondent, essentiellement, à celles des matières de base, le procédé de mélange ne les modifiant pas ou très peu.

Les matières premières, et tout particulièrement, le métasilicate de sodium qui est la plus importante, doivent donc satisfaire à toute une liste d'impératifs parfois contradictoires. Le problème qui se pose est d'apporter le métasilicate de sodium sous une forme telle qu'elle doive satisfaire aux exigences suivantes:

- Les compositions détergentes pour lave-vaisselle étant diffusées auprès d'un vaste public, un aspect visuel soigné est donc requis ce qui signifie une bonne blancheur, des grains bien arrondis et d'un diamètre moyen approprié, une répartition granulométrique étroite excluant les particules les plus fines et les plus grosses qui provoquent une impression d'hétérogénéité.

- A côté de ces caractéristiques d'aspect, les compositions détergentes pour lave-vaisselle, pour être bien acceptées par l'utilisateur doivent correspondre à des produits concentrés et denses. Les matières premières doivent donc présenter un poids spécifique élevé, supérieur à 1 et une teneur en eau optimisée de manière à ne pas provoquer une dilution trop importante de la composition. La densité apparente élevée est également rendue nécessaire par la taille relativement réduite des distributeurs intégrés aux machines lave-vaisselle.

- Les matières premières mises en oeuvre doivent être inoffensives pour l'utilisateur. Or, le métasilicate de sodium peut être considéré comme un produit relativement agressif. Un de ces inconvénients bien connus est qu'il provoque des irritations passagères des muqueuses de l'utilisateur ce qui se traduit par des picotements du nez et éternuements. Cette gêne respiratoire est due à l'apparition de très fines particules de métasilicate de sodium qui résultent de l'usure ou de la destruction (attrition) des particules plus grosses lors de diverses manipulations mécaniques que subit le produit. On emploie généralement le terme de «poussiérage» pour définir ce phénomène et cette notion de poussiérage permet de quantifier l'agressivité des formules lave-vaisselle. Une des raisons pour laquelle le métasilicate de sodium est un produit relativement agressif vient de son alcalinité. Or, cette alcalinité est rendu absolument nécessaire par l'impératif «efficacité» qu'il est impossible de sacrifier de sorte qu'il y a un problème à résoudre en tenant compte de cette double exigence dont les réponses sont contradictoires.

- Les matières premières doivent être stables au stockage et posséder une bonne résistance au mottage. Elles doivent être également compatibles avec les autres constituants des compositions détergentes lave-vaisselle. Elles ne doivent pas provoquer la dégradation des parfums, des produits à chlore libérable (dichloroisocyanurate de sodium) et ni celle des tensio-actifs non ioniques.

Parmi les agents tensio-actifs habituellement utilisés, on peut citer les produits résultant de la condensation de l'oxyde d'éthylène sur un polypropylèneglycol, ou encore de l'oxyde d'éthylène sur les alcoylphénols.

Malheureusement, les compositions résultant du mélange de ces produits et du métasilicate de sodium anhydre ne sont pas stables. On observe en particulier l'apparition d'une coloration au bout d'un certain temps de stockage ainsi qu'une évolution de l'odeur des parfums, notamment à base d'aldéhyde.

- Enfin les matières premières doivent avoir une bonne disponibilité dans les machines lave-vaisselle. Ce dernier point est l'un des plus importants et recouvre à la fois l'aptitude du produit à s'évacuer du distributeur automatique, puis à se dissoudre le plus rapidement et le plus complètement possible pendant la durée de la phase «lavage» du cycle de la machine.

Il ressort nettement de ce qui précède qu'il est très difficile de trouver une matière première apportant le métasilicate de sodium qui satisfasse à tous les impératifs précités qui sont parfois contradictoires.

Jusqu'à présent, les matières premières auxquelles on peut faire appel et qui sont le métasilicate de sodium anhydre, le métasilicate de sodium à faible teneur en eau, le métasilicate de sodium pentahydraté sous forme de billes ou granulés, n'ont pas donné entière satisfaction.

On peut mettre en oeuvre dans les compositions détergentes pour lave-vaisselle un métasilicate de sodium pratiquement anhydre ne contenant pas plus de 0,2% d'eau provenant de la fusion de carbonate de sodium et de sable, refroidissement, broyage et tamisage par exemple entre 0,4 et 1,4 mm.

Les avantages d'un tel produit sont sa densité apparente extrêmement élevée du fait de sa faible porosité et sa grande concentration en raison de la très faible teneur en eau ainsi que l'absence de risque de mottage par élévation de température et une bonne compatibilité avec les produits à chlore libérable.

Les inconvénients sont plus nombreux : l'aspect est celui d'un produit broyé, c'est-à-dire des grains à arêtes vives, la blancheur n'est pas très grande et dépend beaucoup des matières premières car son procédé de fabrication ne comporte pas de possibilité de purification. Le poussiérage est important, la compatibilité avec les tensio-actifs non ioniques est mauvaise. C'est également un produit chimiquement assez agressif du fait de son caractère anhydre et qui peut motter en cas d'élévation de l'hygrométrie. Enfin, l'aptitude à la dissolution dans le lave-vaisselle est faible.

On peut également choisir de mettre en oeuvre le métasilicate de sodium sous forme de métasilicate de sodium pentahydraté sous forme de billes ou granulés. Généralement, il est obtenu à partir d'une solution de métasilicate de sodium de rapport molaire $SiO_2/Na_2O$ égal à 1, par concentration de cette solution jusqu'à la stoechiométrie, cristallisation par refroidissement réalisé sur une bande refroidie, et par granulation en lit fluidisé ou en tambour tournant.

Les produits sont obtenus par la cristallisation d'une solution, et à ce niveau, on peut procéder à une purification, par exemple par filtration. C'est donc là un des avantages de ce type de produit, qui peut être obtenu plus pur.

Le métasilicate de sodium pentahydraté a un meilleur comportement à la dissolution. Il représente une forme diluée et «stabilisée» du métasilicate et de ce fait, se classe moins agressif que les produits anhydres.

Leur résistance au mottage par élévation d'hygrométrie est meilleure, car il est moins avide d'eau. Egalement, il présente une meilleure compatibilité avec les tension-actifs non ioniques.

Cependant, ils présentent encore de nombreux inconvénients. La couleur du métasilicate de sodium pentahydraté n'atteint pas des valeurs équivalentes à celles du métasilicate de sodium anhydre du type granulé qui est beaucoup plus blanc. En conséquence, dans la composition détergente, on décèle une hétérogénéité de couleur qui nuit à l'aspect.

La densité apparente est beaucoup plus faible que celle du métasilicate de sodium anhydre à porosité de grains et diamètre moyen égaux. La quantité d'eau présente dans le métasilicate de sodium pentahydraté étant importante (42,5%), leur emploi entraîne une forte dilution des formules lave-vaisselle et un abaissement correspondant d'efficacité. En cas d'élévation de température, les risques de mottage par fusion partielle sont grands.

Enfin, la compatibilité du métasilicate de sodium pentahydraté avec les produits à chlore actif est mauvaise.

BAKER et HOLLOWAY ont décrit un procédé qui sert à fabriquer soit un métasilicate de sodium pentahydraté (M5) d'une structure en forme d'oignon (DE-C 1 567 573, US-A-3 377 134 ), soit un produit d'anhydre analoguement structuré (M0) (DE-C 1 567 572, US-A-3 208 822). Dans ce dernier procédé, l'accroissement de la taille d'un cristal de M0 se fait par application répétée de couches de M0 pulvérulent et de M5 fondu et par leur séchage respectif et immédiat en vue d'obtenir une couche anhydre. Pour vaporiser instantanément l'eau introduite avec le M5 fondu, le silicate solide est maintenu à une température supérieure à 130°C et, pour le séchage et le chauffage, l'on met en oeuvre de la vapeur d'eau surchauffée ou un gaz de combustion à une température supérieure à 200°C. Ce procédé permet la fabrication d'un produit M0 ayant une structure en forme d'oignon autour d'un cristal mais le coeur n'est pas formé par agglomération de petites particules M0.

La GB-A-1449 859 regroupe la description de ces deux procédés différents et décrit aussi bien la fabrication d'un produit M5 et d'un produit M0 ayant respectivement une structure en forme d'oignon. Cependant, elle ne décrit ni un métasilicate de sodium ayant une teneur en eau située entre les formes anhydre et pentahydratée, ni des granulés ayant un coeur formé par agglomération de fines particules M0.

Afin de pallier certains inconvénients du métasilicate de sodium anhydre, on a préconisé de le granuler. On peut préparer des granulés à faible teneur en eau à partir d'une solution aqueuse de métasilicate de sodium de rapport molaire $SiO_2/Na_2O$ égal à 1 qui est granulée, puis séchée. Selon une technique décrite dans FR-A N° 2403974, on fabrique des granulés ayant une teneur en eau de 2 à 6% d'eau selon un procédé qui consiste à mettre en contact du métasilicate de sodium anhydre et une liqueur de métasilicate de sodium, par pulvérisation de ladite liqueur dans la masse de particules de métasilicate de sodium anhydre maintenues en mouvement par rotation d'un tambour muni d'aubes de relevage provoquant la formation de rideaux de particules; particules que l'on soumet à l'action thermique de gaz chauds ayant une température de 200 à 500°C, et enfin, que l'on refroidit les granulés obtenus dans une enceinte agitée ayant une température moyenne comprise entre 42 et 65°C.

Le procédé de fabrication que l'on vient de décrire conduit à l'obtention d'un produit amélioré: l'aspect et la blancheur sont meilleurs, la concentration est peu abaissée. La compatibilité avec les tensio-actifs non ioniques est supérieure. Le poussiérage et la vitesse de dissolution sont sensiblement améliorés.

Par contre, la densité apparente est plus basse et la solidité des grains est inférieure.

Il apparaît clairement de ce qui précède qu'il y a une difficulté à vaincre au niveau de la matière première appportant le métasilicate de sodium qui d'une part, doit satisfaire à des impératifs économiques requérant un produit concentré et efficace et qui, d'autre part, doit répondre à des exigences d'innocuité et de non-agressivité vis-à-vis de l'utilisateur.

Il a maintenant été trouvé et c'est ce qui constitue l'un des objets de l'invention de nouveaux granulés de métasilicate de sodium constitués de métasilicate de sodium anhydre et de métasilicate de sodium pentahydraté, caractérisés par le fait qu'ils sont composés d'un coeur central de particules de métasilicate de sodium anhydre de dimensions comprises entre 0,05 et 0,8 mm agglomérées par du métasilicate de sodium pentahydraté et entouré d'une couche périphérique de métasilicate de sodium pentahydraté et que la quantité d'eau contenue dans le métasilicate de sodium pentahydraté représente 10 à 25% du poids du produit fini.

Les granulés de l'invention ont la composition suivante:

| | |
|---|---|
| métasilicate de sodium, $Na_2SiO_3$ | 73-88% |
| eau | 10-25% |
| impuretés | <2% |

D'une manière préférentielle, la teneur en eau des granulés sera choisie entre 12 et 22%.

On note la présence d'impuretés provenant des matières premières et qui sont essentiellement constituées par du carbonate de sodium et de l'oxyde de fer.

Les caractéristiques physiques de ces granulés sont:

| | |
|---|---|
| masse volumique apparente en $g/cm^3$ | 0,95-1,20 |
| diamètre moyen en mm | 0,55-0,60 |
| % de granulés supérieurs à 1 mm | 15% maximum |
| % de granulés inférieurs à 0,25 mm | 1% maximum |

Les définitions et les méthodes de détermination de ces caractéristiques seront précisées dans les exemples.

De par leurs caractéristiques de construction, les granulés de métasilicate de sodium possèdent les propriétés suivantes:

- densité apparente élevée
- excellent comportement en atmosphère chaude et en atmosphère humide
- très bonne résistance à l'attrition.

Dans ses applications en détergence, il présente l'avantage de très bien se comporter en présence de produits à chlore libérable, de tensio-actifs non ioniques, des parfums, etc.

Dans leur mise en oeuvre dans les compositions détergentes pour lave-vaisselle, ils se dissolvent rapidement et le taux de produit non dissous en fin de cycle de lavage est relativement bas.

La structure originale de ces granulés est obtenue grâce à un procédé de fabrication parfaitement adapté.

Les granulés de métasilicate de sodium de l'invention sont obtenus selon un procédé caractérisé par le fait:

- que dans une première zone dite de granulation on pulvérise, à la surface de particules de métasilicate de sodium anhydre qui sont maintenues sous agitation sous la forme d'un lit roulant, une liqueur de métasilicate de sodium avec un extrait sec de 30 à 58 % et maintient la température des granulés à la sortie de la zone de granulation entre la température ambiante et 50°C par balayage de la zone de granulation par un courant d'air introduit à température ambiante, le temps de séjour des particules dans la zone de granulation étant compris entre 5 et 30 min,
- que dans des zones ultérieures dites de maturation, on soumet les granulés à un traitement pendant 30 à 60 minutes à l'aide d'un courant ou d'un contre-courant gazeux, de manière à ce que la température des granulés à la sortie de la zone de maturation soit inférieure à 35°C, à laisser subsister dans lesdits granulés au moins 10 à 25 % d'eau et provoquer la formation superficielle du métasilicate de sodium pentahydraté.

Les granulés de l'invention sont préparés à partir de métasilicate de sodium anhydre. Par métasilicate de sodium anhydre, on entend un métasilicate de formule $Na_2SiO_3$ renfermant au maximum 5% d'eau.

Selon le procédé de l'invention, on peut faire appel à tout métasilicate de sodium anhydre que l'on trouve dans le commerce. En particulier, on peut utiliser du métasilicate de sodium anhydre obtenu selon le procédé qui consiste à faire fondre ensemble les matières premières nécessaires comprenant du carbonate de sodium anhydre et du sable purifié, à température élevée (1200-1300°C) à refroidir le produit obtenu et à le laisser cristalliser en une masse qui est ensuite concassée, broyée puis tamisé à la granulométrie souhaitée. Compte tenu du fait que les impuretés présentes dans les réactifs se retrouvent dans la masse à cristalliser, il y a intérêt à mettre en oeuvre un sable présentant la plus grande pureté, c'est-à-dire moins de 0,4% d'oxydes métalliques essentiellement des oxydes de fer et d'aluminium et de préférence avec moins de 0,1% desdits oxydes. En ce qui concerne la granulométrie du métasilicate de sodium anhydre, elle ne présente aucun caractère critique et elle sera choisie en fonction des caractéristiques de granulométrie souhaitée pour le produit fini.

Généralement, le métasilicate de sodium anhydre utilisé présente des particules ayant des dimensions variant entre 0,05 et 0,80 mm.

La phase liquide à l'entrée de la première zone est comme déjà dit, constituée par une liqueur de métasilicate de sodium obtenue, par exemple, par dissolution de métasilicate de sodium anhydre ou par traitement d'une solution d'un silicate de rapport molaire $SiO_2/Na_2O$ plus élevé par de la soude caustique de manière à ramener le rapport à 1.

On peut également mettre en oeuvre une liqueur résultant de l'attaque directe du sable par de la soude.

D'une manière préférentielle la liqueur est préparée par dissolution dans l'eau et sous agitation du métasilicate de sodium anhydre à une température variant entre 70 et 90°C, de préférence 80° C.

La liqueur de métasilicate de sodium est préparée de telle sorte qu'elle présente un extrait sec de 30 à 58% et de préférence, situé entre 40 et 50%.

Le rapport pondéral entre l'extrait sec de la liqueur de métasilicate de sodium et le granulé total peut varier de 0.042 à 0,34 et de préférence de 0,08 à 0,22.

La première étape du procédé consiste à granuler le métasilicate de sodium anhydre. Pour ce faire, la liqueur de métasilicate de sodium est pulvérisée verticalement sur des particules de métasilicate de sodium anhydre maintenues sous agitation, sous la forme d'un lit roulant.

La formation du lit roulant de particules est assurée par la rotation d'un tambour tournant.

La vitesse linéaire de rotation du tambour varie de 0,08 à 1,5 m/s et de préférence entre 0,3 et 0,8 m/s.

Les débits d'alimentation adaptés aux dimensions de ce tambour varient respectivement pour le métasilicate de sodium anhydre entre 2000 et 3000 kg/h et pour la liqueur de métasilicate de sodium entre 1000 et 1500 kg/h.

Le temps de séjour des particules dans la zone de granulation est compris entre 5 et 30 min, de préférence 15 min.

La température dans la zone de granulation est une température d'équilibre entre plusieurs flux thermiques. Les réactions d'hydratation et de cristallisation du métasilicate de sodium étant exothermiques, la liqueur de métasilicate de sodium étant préparée à chaud, il est nécessaire de balayer la zone de granulation par un courant gazeux dont la température est inférieure à la température des granulés obtenus.

Le balayage est assuré à l'aide d'un courant gazeux, par exemple, d'air ou d'azote à température ambiante (entre 5 et 30°C), à co- ou contre-courant de la masse solide. D'une manière préférentielle on travaille à co-courant de façon à éviter les envolées de métasilicate de sodium anhydre.

La température des granulés à la sortie de la zone de granulation doit être inférieure à une température de 50°C mais peut varier sans inconvénient entre la température ambiante et 50°C.

A la sortie de la zone de granulation, le métasilicate de sodium pentahydraté a déjà cristallisé en surface mais il est préférable de parfaire sa cristallisation par une étape de maturation qui consiste à refroidir le produit obtenu permettant ainsi de compléter la cristallisation et d'assurer la stabilité des granulés obtenus.

Le refroidissement est réalisé à l'aide d'un courant gazeux, par exemple, air, azote, allant de préférence à contre-courant de la masse à refroidir.

La température des granulés obtenus à la sortie de la zone de maturation doit être inférieure à 35°C de façon qu'ils soient aisément manipulables.

Les granulés sont agités de manière à assurer de bons échanges thermiques. L'agitation peut être assurée par déplacement des granulés maintenus sous la forme d'un lit tombant ou sous la forme d'un lit fluidisé.

La vitesse linéaire de rotation du tambour varie de 0,08 à 0,5 m/s et de préférence entre 0,2 et 0,4 m/s.

Le temps de séjour des granulés dans la zone dite de maturation est compris entre 30 et 60 min selon le type d'appareillage utilisé.

Les granulés sont ensuite évacués, tamisés à la granulométrie souhaitée qui est choisie le plus souvent entre 0,4 et 1,25 mm.

Enfin, selon une forme de réalisation avantageuse de l'invention, on recycle les fines particules séparées par tamisage et les poussières récupérées par filtration du courant gazeux, à l'entrée de la zone de granulation. Avantageusement, le taux de recyclage est de 20 à 40% du poids du produit final.

Un des effets les plus importants de ce recyclage est de permettre une marche stable du procédé. En recyclant les fines particules, on peut compenser en partie les écarts de granulométrie du métasilicate de sodium anhydre car il est difficile de s'en procurer avec une granulométrie suffisamment régulière.

Le procédé de l'invention peut être mis en oeuvre dans des dispositifs en soi connus.

On fait appel, pour la première phase, à un moyen permettant d'assurer la formation d'un lit roulant de particules. Le dispositif, le plus adéquat, est un tambour rotatif à parois lisses ou à ailettes d'une hauteur inférieure à celle de la hauteur du lit du produit.

En ce qui concerne l'étape de maturation, on peut employer tout moyen donnant une masse pulvérulente en mouvement d'amont en aval assurant un bon contact entre une masse solide à refroidir et un courant gazeux permettant le refroidissement. Pratiquement, on peut utiliser un tambourotatif muni d'aubes de relevage: l'action de ces aubes est d'élever une partie du lit de matière granulaire reposant dans le tambour lorsque ce dernier tourne et de laisser retomber les granulés en pluie en formant des rideaux occupant la majeure partie du volume dudit tambour, s'étendant verticalement et longitudinalement à travers le tambouet se déplaçant à travers le tambour, d'un côté à l'autre.

On peut également utiliser un système équivalent constitué par un lit fluidisé pourvu de moyen permettant le déplacement du lit fluidisé, le plus souvent, de l'air.

Il est à noter que l'on peut envisager d'effectuer les deux opérations de granulation et de maturation dans un seul tambour mais il est préférable d'utiliser deux tambours pour une question de circulation du courant gazeux. En effet, dans la première zone, on a intérêt à envoyer le courant gazeux à co-courant de celui de la matière afin d'éviter les envolées de métasilicate de sodium anhydre. Par contre, il est préférable d'assurer au moins partiellement dans la zone de maturation, un contre-courant gazeux de façon à assurer un refroidissement meilleur et plus rapide.

Un mode de réalisation pratique de l'invention est illustré par le dessin annexé.

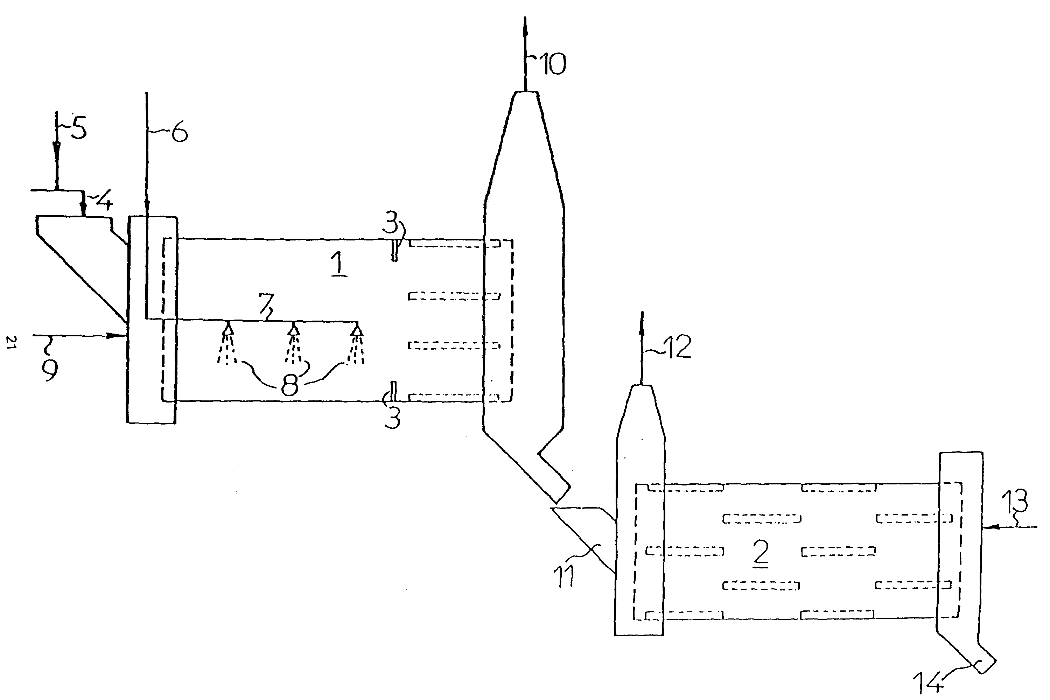

La fig. 1 est une vue latérale schématique d'un appareil adapté à la mise en oeuvre de l'invention.

L'appareil utilisé est constitué de deux tambours 1 et 2 creux de forme allongée. Chaque tambour est rotatif et monté de façon que son axe soit légèrement incliné sur l'horizontal, par exemple de 5° environ et est équipé de moyens pour faire tourner le tambour à la vitesse voulue; lesdits moyens étant connus n'ont pas été représentés sur le dessin.

Chaque tambour possède à l'entrée et à la sortie, un diaphragme non représenté sur la figure, ayant la forme d'un anneau dont la fonction est de retenir les produits qui y sont introduits.

En se référant à la fig. 1, on voit que le tambour 1 est divisé en 2 compartiments à l'aide d'un diaphragme 3: le premier correspondant à la zone dite de granulation et le deuxième à une première zone de maturation. La hauteur du diaphragme 3 va déterminer la hauteur du lit de produit.

Un conduit 4 s'inclinant vers le bas sert à délivrer le métasilicate de sodium anhydre dans la partie inférieure de l'extrémité du tambour 1.

Le tambour 1 présente dans sa première partie des parois lisses. La rotation du tambour entraîne la formation d'un lit roulant de produit permettant aux particules de s'agglomérer.

La liqueur de métasilicate de sodium est préparée auparavant dans une cuve pourvue d'un dispositif de chauffage et équipée d'un agitateur entraîné par un moteur de façon classique. Elle est délivrée sous pression générée par une pompe ou autre système tel que le déplacement par l'air comprimé et le débit est régulé par vanne automatique.

La liqueur est amenée par le conduit 6 et est pulvérisée sur le métasilicate de sodium anhydre en mouvement par l'intermédiaire de pulvérisateurs mécaniques 8 montés sur une rampe de pulvérisation 7. On peut également pulvériser le liquide par fluide auxiliaire (air) ou par un système mixte.

Le tambour étant légèrement incliné, le métasilicate de sodium se déplace dans la deuxième partie du tambour 1 dans lequel se trouve un certain nombre d'aubes de relevage.

L'arrivée du courant gazeux 9 se fait par l'orifice délimité par le diaphragme situé à l'entrée du tambour 1.

A l'extrémité de sortie du tambour se trouve un collecteur 10 qui a pour fonction d'évacuer les gaz réchauffés sortant du tambour 1.

La circulation du gaz est assurée par aspiration à l'aide d'un ventilateur d'extraction placé à la sortie du collecteur 10.

Un filtre placé avant celui-ci permet de retenir les poussières contenues dans le courant gazeux.

Les granulés passent du premier au deuxième tambour par simple gravité par le conduit 11 ou à l'aide d'un convoyeur adapté au produit.

Ils traversent un deuxième collecteur 12 et tombent dans la partie inférieure du deuxième tambour. Le collecteur 12 sert à évacuer les gaz du tambour 2. A la sortie du collecteur 12 se trouve un filtre puis un ventilateur d'extraction.

Le tambour 2 comporte à son extrémité de sortie, un orifice délimité par le diaphragme permettant l'arrivée d'un courant gazeux 13 qui circule à contre-courant de la matière du fait qu'il est aspiré par le ventilateur placé à la sortie du collecteur 12.

Il est également équipé d'un dispositif d'évacuation 14 des granulés.

Les granulés sortis du deuxième tambour sont tamisés sur un tamis quelconque (tamis à vibrations, rotatif ou autre type) permettant d'éliminer les grosses particules qui peuvent être amenées à la granulométrie souhaitée par broyage et de séparer les fines particules qui peuvent être recyclées en tête à l'entrée du tambour 1 en 5.

On recycle également au même endroit les poussières retenues par les différents filtres placés à la sortie des collecteurs 10 et 12.

On obtient des granulés à caractéristiques améliorées qui seront précisées ultérieurement.

Les granulés de métasilicate de sodium de l'invention sont avantageusement mis en oeuvre dans des compositions détergentes pour lave-vaisselle.

La proportion en poids des granulés de l'invention dans lesdites compositions détergentes est de 20 à 70%. Lesdites compositions peuvent contenir:

- 20 à 70% en poids de granulés de métasilicate de sodium selon l'invention,
- 10 à 70% en poids d'un phosphate ou polyphosphate de métal alcalin,
- 1 à 30% en poids d'un ou des sels minéraux solubles,
- 0,2 à 3% en poids d'un tensio-actif non ionique,
- 0,2 à 5% en poids d'un composé à chlore libérable,
- 0,2 à 5% en poids d'additifs tels: inhibiteur de corrosion, agent antimousse, agent antimottant, parfum, colorant, éventuellement de
- 0 à 50% en poids d'un silico-aluminate naturel ou synthétique.

Comme phosphate ou polyphosphate de métal alcalin, on peut citer l'orthophosphate de sodium, le pyrophosphate de sodium ou de potassium, le triphosphate de sodium. D'une manière préférentielle, on emploie ce dernier.

Comme exemples de sels minéraux solubles, on peut nommer le carbonate de sodium, le sulfate de sodium, le borate de sodium, le chlorure de sodium, le bicarbonate de sodium ou de potassium.

Le tensio-actif non ionique doit avoir un bon pouvoir mouillant mais doit être non moussant. Les tensio-actifs non ioniques appropriés sont:

- les alcoylphénols polyoxyéthylénés par exemple les produits de condensation d'oxyde d'éthylène à raison de 1 à 6 mol par mole d'alcoylphénol, le radical alcoyle étant linéaire ou ramifié et contenant de 6 à 12 atomes de carbone. On peut citer tout particulièrement le nonylphénol condensé avec 2 mol d'oxyde d'éthylène par mole de phénol, le dodécylphénol condensé avec 2 à 6 mol d'oxyde d'éthylène par mole de phénol;
- les alcools aliphatiques polyoxyéthylénés résultant de la condensation avec l'oxyde d'éthylène à raison de 2 à 6 mol d'oxyde d'éthylène, d'alcools gras linéaires ou ramifiés contenant de 8 à 22 atomes de carbone: par exemple le produit de condensation d'environ 2 à 4 mol d'oxyde d'éthylène avec 1 mol d'alcool en $C18$;
- les alcools polyoxyéthylénés et polyoxypropylénés. On peut citer notamment les produits commercialisés sous la marque Plurafac qui sont des alcools primaires linéaires polyoxyéthylénés et polyoxypropylénés;
- les dérivés polyoxyéthylénés et polyoxypropylénés: une illustration de ce type de tensio-actifs sont les produits bien connus vendus sous le nom de Pluronics. On les obtient par addition séquentielle d'oxyde de propylène puis d'oxyde d'éthylène sur un composé à hydrogène réactif de bas poids moléculaire tel que par exemple, le propylèneglycol. On peut citer en particulier le tensio-actif contenant 10% de polyoxyéthylène par rapport au poids de polyoxypropylène ayant une masse moléculaire en poids de 1750.

Le composé à chlore libérable peut être choisi parmi: les dichloroisocyanurates de sodium ou de potassium anhydres ou hydratés, le dichlorodiméthylhydantoïne, le glycolurile dichloré, la chloramine T.

Conviennent également dans les compositions détergentes, les silico-aluminates de sodium cristallisés insolubles capables d'échangers les ions sodium par les ions calcium et magnésium présents dans le bain de lavage. On peut employer des silico-aluminates naturels mais aussi synthétiques tels que en particulier, les zéolithes du type 4A.

Au cours de la préparation des compositions détergentes, les granulés de l'invention peuvent être introduits sans inconvénient à n'importe quel moment mais il y a un ordre préférentiel d'introduction des constituants.

L'opération est réalisée généralement dans un mélangeur (de type tournant continu ou discontinu). On charge d'abord le phosphate ou le polyphosphate de métal alcalin puis on pulvérise sur ce dernier le tensio-actif non ionique puis on ajoute les autres constituants sous forme de poudre dont les granulés de métasilicate de sodium de l'invention et en dernier lieu, on additionne le composé à chlore libérable.

Les granulés de l'invention sont comme souligné précédemment parfaitement bien adaptés à leur mise en oeuvre dans les compositions détergentes pour lave-vaisselle. Leur emploi n'est pas limité à cette application et ils peuvent avantageusement être utilisés dans tous les autres domaines d'utilisation du métasilicate de sodium: détergence ménagère dans les poudres à laver pour le linge, détergence pour les collectivités, détergence industrielle en particulier dans les industries alimentaires (lavage des bouteilles), dans les industries métallurgiques (dégraissage des métaux ferreux et de l'aluminium) dans les industries textiles (en particulier dans les bains de blanchiment au peroxyde d'hydrogène).

La présente invention est illustrée de manière non limitative par des exemples de préparation des granulés de l'invention.

Ces granulés sont soumis à des tests ci-après qui mettent en évidence leurs propriétés physico-chimiques et leur efficacité de nettoyage lorsqu'ils sont introduits dans des compositions lave-vaisselle.

Dans les exemples, les pourcentages donnés sont en poids.

Exemples:

*I. Préparation des granulés de l'invention*

On réalise la fabrication des granulés de l'invention à partir de métasilicate de sodium anhydre commercialisé sous la marque Simet AP dont les caractéristiques sont les suivantes:
caractéristiques physiques:

- aspect d'une poudre
- masse volumique apparente 1,2

caractéristiques chimiques:

- $SiO_2$ sur matières sèches: 46,6%
- $Na_2O$ sur matières sèches : 50,9%
- $CO_2$ sur matières sèches: 2.0%
- $H_2O$ : 0,2%
- $Fe_2O_3$ : 0,05 maximum %

spécifications granulométriques:

- diamètre moyen de 0.16 mm
- refus de 7% au tamis de 0,63 mm.

- insoluble: 0,1 maximum %

La préparation des granulés de l'invention à partir de métasilicate de sodium anhydre précédemment caractérisé est réalisée dans un dispositif tel que schématisé sur la fig. 1 comprenant deux tambours rotatifs 1 et 2 ayant les caractéristiques suivantes:

|  | Tambour 1 | Tambour 2 |
|---|---|---|
| Longueur en m | 8,00 | 8,00 |
| Diamètre en m | 2,50 | 2,50 |
| Vitesse de rotation | 5,7 tours/min | 1,6 tours/min |
|  | 0,75 m/s | 0,21 m/s |

Le tambour 1 est divisé par le diaphragme 3 en deux compartiments: le premier de 5,3m correspondant à une zone de granulation, le deuxième de 2,7 m correspondant à une première zone de maturation. Le tambour 1 présente dans sa première partie des parois lisses et est muni d'aubes de relevage dans sa deuxième partie.

On introduit le métasilicate de sodium anhydre dans le tambour 1 par le conduit 4 sur lequel peut être raccordé un conduit 5 permettant le recyclage des fines.

On pulvérise la liqueur de métasilicate de sodium amenée par le conduit 6 au moyen de pulvérisateurs mécaniques 8 montés sur une rampe de pulvérisation 7.

De l'air 9 est introduit à co-courant de la matière dans le tambour 1 et évacué par le collecteur 10 à la sortie duquel il est aspiré par un ventilateur d'extraction après passage sur un filtre.

Le produit issu du tambour 1 est amené par simple gravité par le conduit 11 dans le tambour 2 muni d'aubes de relevage.

Il est traité à contre-courant par de l'air à température ambiante introduit en 13 et évacué par le collecteur 12 à la sortie duquel il est aspiré par un ventilateur d'extraction après passage sur filtre.

Les granulés finis sont évacués en 14 puis tamisés.

Les conditions de traitement sont résumés dans le tableau I.

Tableau I

| Ex. | Liqueur de métasilicate de sodium débit kg/h | Liqueur de métasilicate de sodium extrait sec % | Métasilicate de sodium anhydre débit kg/h | Granulés recyclés en 5 débit kg/h | Température du gaz dans la zone de granulation entrée 9 | Température du gaz dans la zone de granulation sortie | Température du gaz dans la zone de maturation entrée 13 | Température du gaz dans la zone de maturation sortie | Température du produit sortie de zone de granulation 11 | Température du produit sortie de zone de maturation 14 |
|---|---|---|---|---|---|---|---|---|---|---|
| 1 | 1070 | 46,8 | 2000 | 1000 | 27 | 46 | 27 | 36 | 44 | 35 |
| 2 | 1100 | 42,2 | 3000 | 1000 | 20 | 38 | 20 | 32 | 30 | 32 |
| 3 | 1700 | 48,5 | 2500 | 1500 | 14 | 48 | 14 | 31 | 50 | 27 |
| 4 | 1200 | 44,0 | 3000 | 1500 | 23 | 46 | 23 | 34 | 44 | 30 |
| 5 | 1330 | 48,3 | 2500 | 2000 | 7 | 50 | 7 | 34 | 50 | 22 |
| 6 | 2240 | 41 | 2500 | 1500 | 11 | 49 | 11 | 35 | 50 | 37 |

Les caractéristiques des granulés obtenus, tamisés entre 0.4 et 1,25 mm sont rassemblées dans le tableau II.

La teneur en eau est déterminée par pesée du produit après calcination à 550°C.

La masse volumique apparente est déterminée par mesure du volume d'une masse donnée de produit dans une éprouvette graduée, sans tassement.

La granulométrie est déterminée par passage sur des tamis normalisés AFNOR. Le diamètre moyen est défini comme étant un diamètre tel que 50% en poids des particules ont un diamètre supérieur ou inférieur au diamètre moyen.

Tableau II

| Exemples | Teneur en eau % | Composition des granulés | | Masse volumique apparente g/cm$^3$ | Granulométrie refus cumulés à | | Diamètre moyen mm |
|---|---|---|---|---|---|---|---|
| | | Métasilicate de sodium anhydre % | Métasilicate de sodium pentahydraté % | | 0,25 mm | 1 mm | |
| 1 | 16,6 | 61 | 39 | 1,13 | 99,5 | 2 | 0,55 |
| 2 | 10 | 76,5 | 23,5 | 1,17 | 99,5 | 3 | 0,59 |
| 3 | 20 | 53,0 | 47,0 | 1,10 | 99,5 | 4 | 0,60 |
| 4 | 11,0 | 74,1 | 25,9 | 1,20 | 99,3 | 3 | 0,55 |
| 5 | 14,0 | 67,1 | 32,9 | 1,08 | 99,2 | 4 | 0,58 |
| 6 | 25 | 41,2 | 58,8 | 1,05 | 99,7 | 4 | 0,68 |

*II. Propriétés physico-chimiques des granulés de l'invention*

Par une série de mesures et de tests, on met en évidence ci-après, les propriétés physico-chimiques des granulés de l'invention et leur aptitude à être utilisés dans des compositions détergentes pour lave-vaisselle.

Vont être plus précisément étudiés les granulés décrits dans les exemples 1 à 3.

A titre de comparaison, on effectue des essais avec des produits du commerce et qui sont:

- un métalisicate de sodium anhydre (essai A) commercialisé par la Société Rhône-Poulenc sous la dénomination Simet AS. Il est obtenu par fusion à 1200°C environ d'un mélange de sable et de carbonate de sodium. La masse obtenue est après refroidissement, concassée, broyée puis tamisée. Ses caractéristiques chimiques sont les suivantes (les pourcentages sont donnés en poids):

| | |
|---|---|
| $SiO_2$ sur matières sèches | 46,6 |
| $Na_2O$ sur matières sèches | 50.9 |
| $CO_2$ sur matières sèches | 2,0 |
| $H_2O$ | 0,2 |
| $Fe_2O_3$ | 0,05 max |
| Insoluble | 0,1 max |

- un métasilicate de sodium granulé à faible teneur en eau (essai B) commercialisé sous la marque Simet AG, obtenu par le procédé de granulation décrit dans FR-A N° 2403974 et ayant les caractérsitiques chimiques suivantes:

| | |
|---|---|
| $SiO_2$ sur matières sèches | 46,8 |
| $Na_2O$ sur matières sèches | 50,7 |
| $CO_2$ sur matières sèches | 2,0 |
| $H_2O$ | 3,0 |
| $Fe_2O_3$ | 0,05 max |
| Insoluble | 0,1 max |

- un métasilicate de sodium pentahydraté granulé (essai C) vendu sous la marque Simet 5 GS, préparé par granulation d'une solution de métasilicate de sodium puis refroidissement et dont les caractéristiques chimiques sont:

| | |
|---|---|
| $SiO_2$ sur matières sèches | 27,9 |

(suite)

| | |
|---|---|
| $Na_2O$ sur matières sèches | 28,4 |
| $CO_2$ sur matières sèches | 0,7 |
| $H_2O$ | 42,0 |
| $Fe_2O_3$ | 0,05 max |
| Insoluble | 0,1 max |

On donne ci-après, les caractéristiques chimiques des granulés de l'invention:

- métasilicate de sodium à 16,6% d'eau granulé (exemple 1):

| | |
|---|---|
| $SiO_2$ sur produit hydraté | 39,9 |
| $Na_2O$ sur produit hydraté | 41,3 |
| $CO_2$ sur produit hydraté | 2,0 |
| $H_2O$ | 16,6 |
| $Fe_2O_3$ | 0,05 max |
| Insoluble | 0,1 max |

- métasilicate de sodium à 10,0% d'eau granulé (exemple 2):

| | |
|---|---|
| $SiO_2$ sur produit hydraté | 43,2 |
| $Na_2O$ sur produit hydraté | 44,6 |
| $CO_2$ sur produit hydraté | 2 |
| $H_2O$ | 10,0 |
| $Fe_2O_3$ | 0,05 max |
| Insoluble | 0,1 max |

- métasilicate de sodium à 20,0% d'eau granulé (exemple 3):

| | |
|---|---|
| $SiO_2$ sur produit hydraté | 38,3 |
| $Na_2O$ sur produit hydraté | 39,5 |
| $CO_2$ sur produit hydraté | 2 |
| $H_2O$ | 20,0 |
| $Fe_2O_3$ | 0,05 max |
| Insoluble | 0,1 max |

- métasilicate de sodium à 25,0% d'eau granulé (exemple 4):

| | |
|---|---|
| $SiO_2$ sur produit hydraté | 35,8 |
| $Na_2O$ sur produit hydraté | 37,0 |
| $CO_2$ sur produit hydraté | 2 |
| $H_2O$ | 25,0 |
| $Fe_2O_3$ | 0,05 max |
| Insoluble | 0,1 max |

Les paramètres étudiés sur les métasilicates de sodium définis ci-dessus peuvent être rattachés aux cinq points développés au début de notre description:

- aspect:

couleur
forme de grains

granulométrie

résistance à l'attrition ; solidité des grains

- concentration:

  masse volumique apparente

  teneur en eau

- non-agressivité:

  teneur en eau

  poussiérage

  résistance à l'attrition, solidité des grains

  enrobage des grains

- stabilité et compatibilité :

  résistance au mottage

  compatibilité avec les tensio-actifs non ioniques

  compatibilité avec les produits à chlore libérable

- disponibilité en lave-vaisselle:

  cinétique de dissolution

  taux de dissolution.

Avant de détailler les résultats obtenus avec les différents produits testés, on précisera les méthodes utilisées pour la détermination des différents paramètres précités.

*A. L'aspect*

1. *La couleur*

On définit la couleur du produit à tester à l'aide d'un réflectomètre Gardner XL 805 travaillant en coordonnées trichromatiques.

Le principe de la méthode est de mesurer la quantité de lumière réfléchie par le produit sous 3 longueurs d'ondes correspondant à 3 couleurs monochromatiques.

La mesure tient compte sur la luminance et les nuances colorées, des caractéristiques de distribution et de taille granulométrique du produit à tester.

Le résultat est exprimé en coordonnées L, a, b.

- L est la luminance du produit et exclut les questions de nuances colorés. L'échelle des luminances est la suivante:

  0 - noir absolu et 100 - blanc pur

- a et b indiquent les couleurs:

  a positif correspond à une nuance rouge

  a négatif correspond à une nuance verte

  b positif correspond à une nuance jaune

  b négatif correspond à une nuance bleue

  a et b proches de 0 correspondent à un produit non coloré.

2. *Forme des grains*

Elle est caractérisée par examen au microscope électronique à balayage sous grossissement de 100.

3. *Granulométrie*

Elle est déterminée par passage sur une série de tamis normalisés AFNOR puis par pesée de chaque fraction granulométrique.

Elle est exprimée par le diamètre moyen qui est défini comme étant un diamètre tel que 50% en poids des particules ont un diamètre supérieur ou inférieur au diamètre moyen.

4. *Résistance à l'attrition - Solidité des grains*

On fait subir au produit à tester, un traitement mécanique donné, puis on procède à une analyse granulométrique permettant d'évaluer la destruction du granulé.

La manipulation mécanique consiste à mettre 200 g de produit à tester dans un flacon en verre de 2 l et à lui faire subir une rotation de 40 tr/min pendant 1 h sur un agitateur rotatif à flacons Prolabo.

Après ce test de destruction, on mesure le pourcentage des fines par passage à travers deux tamis normalisés AFNOR dont l'ouverture des mailles est de 0,5 mm et 0,25 mm et on compare les résultats obtenus avec ceux mesurés avant le test.

On procède à deux essais par produit.

B. *La concentration*

1. Masse volumique apparente

Elle est déterminée, d'une manière analogue, selon la norme NFT 73-405 qui permet la détermination de la masse volumique apparente des poudres à laver.

On effectue la mesure du volume d'une masse donnée du produit à tester dans une éprouvette graduée après sa chute libre et sans tasser le produit.

On effectue deux déterminations par produit.

2. *Teneur en eau*

On détermine la teneur en eau par pesée du produit qui a été calciné à 550°C.

C. *Non-agressivité*

1. *Teneur en eau*

On se référera au paragraphe B2.

2. *Poussiérage*

L'évaluation du poussiérage d'un produit revient à une mesure granulométrique s'adressant à la fraction des particules les plus fines responsables de ce poussiérage.

On utilise une méthode de sélection granulométrique par élutriation pour quantifier le poussiérage.

Le produit tel quel est introduit dans un appareil de fluidisation décrit dans la norme française P 15-443 où un courant d'azote sec (0,6 bar) entraîne sélectivement les particules très fines responsables du poussiérage.

Celles-ci sont piégées en sortie dans un flacon contenant de l'eau dans laquelle elles se dissolvent puis sont dosées quantitativement par alcalimétrie classique.

L'appareillage utilisé comprend:

- un vase cylindro-conique destiné à recevoir le produit à tester de même diamètre intérieur qu'un tube séparateur auquel il est raccordé hermétiquement en formant avec lui une paroi intérieure continue,
- un tube séparateur vertical animé d'une vibration verticale,
- une amenée d'azote constituée par une tubulure coudée au-dessus du vase et terminée à sa partie inférieure par un ajutage,
- un collecteur de poussières fixé en haut du tube par l'intermédiaire d'un raccord souple.

Le mode opératoire est le suivant:

- on place 5 g du produit à tester dans le fond du vase cylindro-conique,
- on relie le collecteur contenant 200 cm$^3$ d'eau distillée au tube vertical séparateur à l'aide d'un raccord souple,
- le vibreur étant en fonctionnement, on fait débiter l'azote sous une pression de 600 mm de mercure: l'opération dure 15 min,
- on titre l'alcalinité donnée par les poussières par l'acide sulfurique N/50 en présence de phénolphtaléine, soit C1 la coulée obtenue,
- parallèlement, on dose l'alcalinité du produit de base en dissolvant exactement 1 g de produit dans 200 cm$^3$ d'eau par de l'acide sulfurique 1 N, en présence de phénolphtaléine, soit C2 la coulée obtenue,
- on exprime le poussiérage en ppm par rapport au produit tel:

$$\text{Poussiérage} = \frac{C1}{C2} \times 4000$$

- on effectue pour chaque évaluation, 3 essais distincts dont on tire la moyenne.

3. *Résistance à l'attrition - Solidité des grains*

On se reportera au paragraphe A4.

4. *Enrobage des grains*

Par examen au microscope électronique il est possible de voir la répartition du métasilicate de sodium pentahydraté dans les granulés finis.

*D. Stabilité des granulés et compatibilité avec les autres constituants de la composition détergente*

1. *Résistance au mottage*

On effectue des tests de stockage en atmosphère chaude ou humide,

- résistance au mottage en atmosphère chaude: le produit séjourne 2 h, en flacon fermé, dans une enceinte à 40°C,
- résistance au mottage en atmosphère humide: le produit séjourne 2 h dans une atmosphère à 90% d'humidité relative, en cristallisoir ouvert, à température ambiante (entre 18 et 25°C).

Dans les deux cas, on apprécie le résultat comme suit:

- bon: produit sans mottage visible
- mauvais: mottage partiel ou prise en masse totale.

2. *Compatibilité avec les tensio -actifs non ioniques*

On évalue la compatibilité du tensio-actif non ionique et du produit à tester en s'appuyant sur la mesure de l'évolution de la couleur du mélange.

On réalise la confection d'un mélange contenant 98% en poids de produit à tester et 2% en poids d'un tensio-actif non ionique qui est un nonylphénol condensé avec 9 mol d'oxyde d'éthylène (Cémulsol NP9). On agite manuellement jusqu'à bonne homogénéité.

On mesure la couleur initiale du mélange à l'aide du réflectomètre Gardner comme indiqué précédemment.

On accélère le vieillissement du mélange, en le stockant dans un flacon bouché placé dans une étuve à 55°C pendant 24 h.

On mesure la couleur du mélange après vieillissement.

Le calculateur de l'appareil permet de mémoriser les données initiales, d'acquérir les données après vieillissement et de calculer l'écart de coloration (E) existant entre les deux séries de données.

Le niveau de compatibilité du produit à tester et tensio-actif non ionique est exprimé par la valeur de l'écart de coloration et l'on peut donner l'échelle d'appréciation suivante:

| Valeur de E | Niveau de compatibilité du produit à tester/tensio-actif non ionique |
|---|---|
| E<1 | Très bon |
| 1<E<2 | Bon |
| E>2 | Mauvais |

3. *Compatibilité avec les produits à chlore libérable*

On effectue un dosage du chlore résiduel après un test de stockage accéléré.

On réalise la confection d'un mélange contenant 98% en poids de produit à tester et 2% en poids d'un produit à chlore libérable qui est le dichloro-isocyanurate de sodium.

Le produit séjourne 10 d, en flacon bouché, dans une enceinte à 40°C.

Après stockage, on dose le chlore résiduel par iodométrie en milieu acide.

*E. Disponibilité en lave-vaisselle*

Ce test est «global» et intègre l'influence de:

- l'aptitude à l'évacuation du godet,
- les caractéristiques géométriques du lave-vaisselle,
- l'aptitude à la dissolution du produit lui-même.

Il est réalisé dans un appareil ménager Miele G 500 équipé de manière à pouvoir prélever rapidement un échantillon du bain de lavage, toutes les 30 s à partir de l'ouverture du godet, sans ouvrir la porte.

La concentration à chaque prélèvement est évaluée par mesure de conductivité à l'aide d'un conductimètre Tacussel.

On trace la courbe: concentration (conductivité) en fonction du temps et le résultat est exprimé par deux paramètres:

- cinétique de dissolution: temps nécessaire pour dissoudre 65% de la quantité introduite,
- taux de dissolution: pourcentage de produit non dissous à la fin de la période «lavage» du cycle du lave-vaisselle.

Les résultats obtenus avec les différents métasilicates de sodium testés sont consignés dans le tableau III.

TABLEAU III

| RÉFÉRENCES, ESSAIS OU EXEMPLES — Mesures et tests | ESSAI A | ESSAI B | ESSAI C | EXEMPLE 1 | EXEMPLE 2 | EXEMPLE 3 | EXEMPLE 4 |
|---|---|---|---|---|---|---|---|
| | métasilicate de sodium anhydre broyé | métasilicate de sodium anhydre granulé | métasilicate de sodium pentahydraté granulé | métasilicate de sodium à 16.6 % d'eau granulé | métasilicate de sodium à 10,0 % d'eau granulé | métasilicate de sodium à 20,0 % d'eau granulé | métasilicate de sodium à 25,0 % d'eau granulé |
| A — Couleur | L= 87,7 a=+ 0,7 b=+ 2,56 | L= 91,44 a=+ 0,13 b=+ 1,90 | L= 91,6 a=- 0,12 b=+ 2,23 | L= 90,9 a=+ 0,30 b=+ 2,12 | L= 92,1 a=+ 0,53 b=+ 1,37 | L= 90,5 a=+ 0,35 b=+ 2,10 | L=90,4 a= 0,40 b= 2,15 |
| Granulométrie (diamètre moyen) | 0.80 mm | 0.55-0,60 mm | 0,55-0,60 mm | 0,55-0,60 mm | 0,55-0,60 mm | 0,55-0,60 mm | 0,65-0,75 mm |
| Forme des grains | arêtes vives | granulés obtenus par agglomération de formes plus ou moins sphériques | | | | | |
| B — Résistance 0,5 mm à l'attrition 0,25 mm | 1,2% 0,1% | 1,75% 0,35% | 0,10% 0,01% | 0,85% 0,05% | 1,0 % 0,05% | 0,70% 0,05% | 0,50% 0,02% |
| Masse volumique apparente | 1,25 | 0,92 | 0,88 | 1,13 | 1,17 | 1,10 | 1,05 |
| Teneur en eau | 0,2% | 3,0% | 42,0% | 16,6% | 10,0% | 20,0% | 25,0% |
| Teneur en eau | 0,2% | 3,0% | 42,0% | 16,6% | 10,0% | 20,0% | 25,0% |
| Poussiérage (p.p.m.) | 8000 | 900 | 500 | 600 | 800 | 300 | 250 |
| C — Résistance 0,5 mm à l'attrition 0,25 mm | 1,2% 0,1% | 1,75% 0,35% | 0,10% 0,01% | 0,85% 0,05% | 1,0 % 0,05% | 0,70% 0,05% | 0,50% 0,02% |
| Enrobage par métasilicate de sodium pentahydraté | non | non | non | oui | oui | oui | oui |
| D — Résistance au mottage en atmosphère chaude | bon | bon | mauvais | bon | bon | bon | bon |
| Résistance au mottage en atmosphère humide | mauvais | mauvais | bon | bon | bon | bon | bon |
| Compatibilité avec les tensio-actifs non ioniques | 20 | 1,17 | <1 | <1 | <1 | <1 | <1 |
| Compatibilité avec les produits à chlore libérable | 95% | 94% | 25% | 88-90% | | | |
| E — Cinétique de dissolution | 5 min 30 | 3 min 30 | 0 min 20 | 1 min 10 | 2 min 23 | 0 min 50 | 0 min 35 |
| Taux de dissolution | 24,7 | 20,8 | 20,5 | 18,3 | 20,6 | 17,5 | 15,0 |

A l'examen des résultats, les avantages relatifs à l'utilisation des granulés de l'invention sont les suivants:

- par rapport aux métasilicates de sodium anhydres.

L'examen au microscope électronique montre la présence d'une couche superficielle différente du noyau constitué de métasilicate de sodium pentahydraté, ce qui est bien confirmé par l'analyse thermique différentielle (pic endotherme à 72°C).

C'est à cette couche superficielle que l'on peut sans doute attribuer les bons résultats de compatibilité avec les autres constituants de la composition détergente, de résistance au mottage en atmosphère humide, de bonne vitesse de dissolution: tous ces points étant en améloration par rapport aux produits anhydres. Il est à noter également que les granulés de l'invention présentent une agressivité moindre pour l'environnement et que leur cinétique de dissolution et le taux de dissolution sont nettement améliorés.

- Par rapport aux métasilicates de sodium pentahydratés.

Les granulés de l'invention étant partiellement hydratés restent cependant plus concentrés que les métasilicates de sodium pentahydratés et l'on peut évidemment lier cette notion à une meilleure efficacité de détergence. Dans le même ordre d'idée de compacité, on peut mentionner l'obtention de masse volumique apparente élevée au crédit des granulés de l'invention alors que de façon intrinsèque, les métasilicates de sodium pentahydratés ne peuvent être obtenus avec des masses volumiques apparentes supérieures à 0,90.

Egalement, la résistance au mottage en atmosphère chaude est meilleure pour les granulés de l'invention.

La compatibilité avec les produits à chlore libérable se rapproche plus, du bon comportement des métasilicates de sodium anhydres que de celui médiocre des métasilicates de sodium pentahydratés.

Enfin, on a remarqué de façon surprenante que, bien qu'ayant une vitesse de dissolution légèrement inférieure aux métasilicates de sodium pentahydratés, les granulés de l'invention présentent un taux de non-dissous inférieur.

Pour les autres propriétés non évoquées (couleur, granulométrie, forme des grains, solidité des grains), elles ne diffèrent pas essentiellement de celles des produits traditionnels et sont plus affectées par la qualité des matières premières et leur procédé de fabrication que par la composition du produit.

Suit un exemple illustrant la mise en oeuvre des granulés de l'invention dans une composition détergente pour lave-vaisselle.

3. *Utilisation des granulés de l'invention dans les compositions détergentes pour lave-vaisselle*

On réalise la fabrication d'une composition détergente dans laquelle sont introduits les granulés de l'invention décrits dans l'exemple 1 et qui possède la formulation suivante:

| | |
|---|---|
| métasilicate de sodium à 16,6% d'eau granulé | 60% |
| triphospahte de sodium granulé à 6% d'eau | 30% |
| tensio-actif non ionique: Plurafac RA 43 (alcool polyoxyéthyléné et polyoxypropyléné) | 2% |
| produit à chlore libérable: CDB Clearon (dichloro-isocyanurate de sodium dihydraté) | 3% |
| carbonate de sodium anhydre | 5% |

D'une manière parallèle, on confectionne une lessive classique à titre de référence, dans laquelle on met en oeuvre du métasilicate de sodium anhydre et du métasilicate de sodium pentahydraté en quantités telles que la teneur en eau soit identique à celle apportée par les granulés de l'invention:

| | |
|---|---|
| métasilicate de sodium anhydre broyé (SIMET AS) | 37,4% |
| métasilicate de sodium pentahydraté (SIMET 5 GS) | 22,6% |
| triphosphate de sodium granulé à 6% d'eau | 30% |
| tensio-actif non ionique: Plurafac RA 43 | 2% |
| produit à chlore libérable : CDB Clearon | 3% |
| carbonate de sodium anhydre | 5% |

Les deux compositions détergentes sont fabriquées dans un mélangeur Lodige M5G ayant une capacité utile de 5 l. L'ordre d'introduction des constituants est le suivant: on charge le triphosphate de sodium puis on pulvérise le tensio-actif non ionique sur le triphosphate de sodium, puis on introduit les autres constituants dont les métasilicates de sodium et, en dernier lieu, le produit à chlore libérable.

Les deux compositions détergentes obtenues ont des granulométries sensiblement identiques.

Elles sont conditionnées dans des emballages commerciaux classiques et stockées deux mois à température ambiante et hygrométrie variable de l'air ambiant.

A l'issue d'un stockage de 2 mois, on examine les deux compositions détergentes sous les aspects suivants:

- couleur
- résistance au mottage
- teneur en chlore résiduel (pourcentage exprimé par rapport à la teneur initiale)
- efficacité de lavage en lave-vaisselle

On exposera ci-après, seulement la méthode d'évaluation de l'efficacité d'une composition détergente pour lave-vaisselle, les autres ont déjà été développées précédemment.

Dans le but évident d'obtenir un test sélectif, c'est un substrat difficile à nettoyer qui a été choisi comme représentatif de la vaisselle d'essai. Il s'agit de plaques de duralumin parfaitement planes dont la surface est amenée à un état standard et reproductible par des immersions alternées de 10 min dans un bain acide 1 l d'acide chlorhydrique d = 1,15 dans un bain aqueux d'un volume total de 10 l, rinçage, puis immersion de 10 min dans un bain alcalin contenant 10 g/l de soude pure, rinçage, à nouveau immersion de 2 min dans le bain acide, puis rinçage final.

On applique la salissure composée de lait en poudre, de suif et d'eau sous la forme d'une pâte fluide à l'aide d'un applicateur permettant l'obtention d'une couche mince et d'épaisseur constante (tel que par exemple l'applicateur servant à la préparation des plaques pour chromatographie). On procède ensuite à la fixation par cuisson dans une étuve ventilée à 120°C pendant 1 h.

On prépare systématiquement un nombre de plaques relativement élevé: 30 unités. Après fixation de la salissure, le lot de 30 plaques obtenu est divisé, par tirage au sort, en trois séries de 10 et on formule l'hypothèse que la dispersion de l'intensité de fixation de la salissure est semblable à l'intérieur des séries.

Le premier lot est lavé à l'eau pure (dureté: 33°TH correspondant à 330 mg de $CaCO_3$ par litre d'eau) dans un lave-vaisselle Miele G 500, programme court, sans séchage.

Le deuxième lot est lavé exactement dans les mêmes conditions en présence de la composition détergente de l'invention.

Le troisième lot est lavé en présence de la composition détergente classique caractérisée ci-dessus.

Pour chaque plaque de chaque lot, on calcule le pourcentage d'enlèvement des salissures:

$$\frac{\text{poids salissures éliminées}}{\text{poids salissures initiales}} \times 100$$

Après classement des résultats obtenus par ordre croissant, les résultats d'enlèvement par la composition détergente de l'invention ou par la composition détergente classique sont corrélés par régression linéaire aux résultats d'enlèvement par l'eau. On obtient l'équation reliant Y (efficacité de nettoyage de la composition détergente) à X (enlèvement par l'eau). Pour obtenir un résultat d'efficacité numérique simple, on calcule la valeur de Y pour un enlèvement à l'eau X = 50%. C'est ce chiffre qui caractérise l'efficacité des compositions détergentes dans le tableau IV.

L'étude des deux compositions détergentes a conduit au résultats suivants:

TABLEAU IV

| Paramètres étudiés | Composition détergente selon l'invention | Composition détergente classique |
|---|---|---|
| Couleur | L= 87,8<br>a=- 0,60<br>b=+ 2,70 | L= 70,80<br>a=+ 3,27<br>b=+ 4,60 |
| Résistance au mottage | Le produit conserve son écoulement libre | Une partie du produit est agglomérée sous forme d'agrégats ayant quelques millimètres de diamètre |
| Teneur en chlore résiduel | 88,2% | 72,2% |
| Efficacité de lavage | 83,5% | 76,0% |

On remarque donc, une supériorité des compositions détergentes contenant les granulés de métasilicate de sodium de l'invention.

**Revendications**

**Revendications pour les Etats contractants suivants : BE, CH, DE, FR, GB, IT, LI, LU, NL, SE**

1. Granulés de métasilicate de sodium constitués de métasilicate de sodium anhydre et de métasilicate de sodium pentahydraté, caractérisés par le fait qu'ils sont composés d'un coeur central de particules de métasilicate de sodium anhydre de dimensions comprises entre 0,05 et 0,8 mm, agglomérées par du métasilicate de sodium pentahydraté et entouré d'une couche périphérique de métasilicate de sodium pentahydraté et que la quantité d'eau contenue dans le métasilicate de sodium pentahydraté représente 10 à 25 % du poids du produit fini.

2. Granulés selon l'invention, caractérisés par le fait qu'ils contiennent de 73 à 88 % en poids de métasilicate de sodium ($Na_2SiO_3$) et de 10 à 25 % en poids d'eau.

3. Granulés selon la revendication 2, caractérisés en ce qu'ils contiennent de 12 à 22 % en poids d'eau.

4. Granulés selon l'une des revendications 1 à 3, caractérisés par le fait qu'ils ont une masse volumique apparente de 0,95 à 1,20 g/cm$^3$.

5. Procédé de préparation des granulés décrits dans l'une des revendications 1 à 4, caractérisé par le fait :

   - que dans une première zone dite de granulation on pulvérise, à la surface de particules de métasilicate de sodium anhydre qui sont maintenues sous agitation sous la forme d'un lit roulant, une liqueur de métasilicate de sodium avec un extrait sec de 30 à 58 % et maintient la température des granulés à la sortie de la zone de granulation entre la température ambiante et 50 °C par balayage de la zone de granulation par un courant d'air introduit à température ambiante, le temps de séjour des particules dans la zone de granulation étant compris entre 5 et 30 min.
   - que dans des zones ultérieures dites de maturation, on soumet les granulés à un traitement pendant 30 à 60 minutes à l'aide d'un courant ou d'un contre-courant gazeux, de manière à ce que la température des granulés à la sortie de la zone de maturation soit inférieure à 35 °C, à laisser subsister dans lesdits granulés au moins 10 à 25 % d'eau et provoquer la formation superficielle du métasilicate de sodium pentahydraté.

6. Procédé selon la revendication 5, caractérisé par le fait que la liqueur de métasilicate de sodium est préparée de telle sorte qu'elle présente un extrait sec de 40 à 50 %.

7. Procédé selon l'une des revendications 5 ou 6, caractérisé par le fait que le rapport pondéral entre l'extrait de la liqueur de métasilicate de sodium et le granulé total est supérieur à 0,042.

8. Procédé selon la revendication 7, caractérisé par le fait que le rapport pondéral entre l'extrait de la liqueur de métasilicate de sodium et le granulé total varie de 0,042 à 0,34.

9. Procédé selon la revendication 8, caractérisé par le fait que le rapport pondéral entre l'extrait de la liqueur de métasilicate de sodium et le granulé total varie de 0,08 à 0,22.

10. Procédé selon la revendication 5, caractérisé par le fait que le temps de séjour des particules dans la zone de granulation est de 15 min.

11. Procédé selon l'une des revendications 5 à 10, caractérisé par le fait que dans la zone de maturation, les granulés sont maintenus sous agitation sous la forme d'un lit tombant.

12. Procédé selon l'une des revendications 5 à 11, caractérisé par le fait que ladite température est obtenue par balayage de la zone de maturation par un contre-courant d'air introduit à température ambiante.

13. Procédé selon l'une des revendications 5 à 12, caractérisé par le fait que les granulés finis sont tamisés et que les fines particules et les poussières récupérées par filtration des courants d'air évacués sont recyclés à l'entrée de la zone de granulation.

14. Utilisation des granulés décrits dans l'une des revendications 1 à 4, dans des compositions détergentes pour lave-vaisselle.

**15.** Utilisation selon la revendication 14, caractérisée par le fait que la proportion en poids des granulés de l'invention dans lesdites compositions détergentes est de 20 à 70 %.

**16.** Utilisation selon la revendication 14, caractérisée par le fait que les granulés de l'invention sont introduits dans des compositions détergentes pour lave-vaisselle pouvant contenir

- 20 à 70 % en poids de granulés de métasilicate de sodium selon l'invention,
- 10 à 70 % en poids d'un phosphate ou polyphosphate de métal alcalin,
- 1 à 30 % en poids d'un ou des sels minéraux solubles,
- 0,2 à 3 % en poids d'un tensio-actif non ionique,
- 0,2 à 5 % en poids d'un composé à chlore libérable,
- 0,2 à 5 % en poids d'additifs tels : inhibiteur de corrosion, agent antimousses, agent antimottant, parfum, colorant,
- éventuellement de 0 à 50 % en poids d'un silico-aluminate naturel ou synthétique.

**Revendications pour l'Etat contractant suivant : AT**

**1.** Procédé de préparation des granulés de métasilicate de sodium constitués de métasilicate de sodium anhydre et de métasilicate de sodium pentahydraté, composés d'un coeur central de particules de métasilicate de sodium anhydre de dimensions comprises entre 0,05 et 0,8 mm, agglomérées par du métasilicate de sodium pentahydraté et entouré d'une couche périphérique de métasilicate de sodium pentahydraté, la quantité d'eau contenue dans le métasilicate de sodium pentahydraté représentant 10 à 25 % du poids du produit fini et la masse volumique apparente étant de 0,95 à 1,20 g/cm$^3$, caractérisé par le fait :

- que dans une première zone dite de granulation on pulvérise, à la surface de particules de métasilicate de sodium anhydre qui sont maintenues sous agitation sous la forme d'un lit roulant, avec une liqueur de métasilicate de sodium avec un extrait sec de 30 à 58 % et maintient la température des granulés à la température ambiante et 50 °C par balayage de la zone de granulation par un courant d'air introduit à température ambiante, le temps de séjour des particules dans la zone de granulation étant compris entre 5 et 30 min,
- que dans des zones ultérieures dites de maturation, on soumet les granulés à un traitement pendant 30 à 60 minutes à l'aide d'un courant ou d'un contre-courant gazeux, de manière à ce que la température des granulés à la sortie de la zone de maturation soit inférieure à 35 °C, à laisser subsister dans lesdits granulés au moins 10 à 25 % d'eau et provoquer la formation superficielle du métasilicate de sodium pentahydraté.

**2.** Procédé selon la revendication 1, caractérisé par le fait que la liqueur de métasilicate de sodium est préparée de telle sorte qu'elle présente un extrait sec de 40 à 50 %.

**3.** Procédé selon l'une des revendications 1 ou 2, caractérisé par la fait que le rapport pondéral entre l'extrait de la liqueur de métasilicate de sodium et le granulé total est supérieur à 0,042.

**4.** Procédé selon la revendication 3, caractérisé par le fait que le rapport pondéral entre l'extrait de la liqueur de métasilicate de sodium et le granulé total varie de 0,042 à 0,34.

**5.** Procédé selon la revendication 4, caractérisé par le fait que le rapport pondéral entre l'extrait de la liqueur de métasilicate de sodium et le granulé total varie de 0,08 à 0,22.

**6.** Procédé selon la revendication 5, caractérisé par le fait que le temps de séjour des particules dans la zone de granulation est de 15 min.

**7.** Procédé selon l'une des revendications 1 à 6, caractérisé par le fait que dans la zone de maturation, les granulés sont maintenus sous agitation sous la forme d'un lit tombant.

**8.** Procédé selon l'une des revendications 1 à 7, caractérisé par le fait que ladite température est obtenue par balayage de la zone de maturation par un contre-courant d'air introduit à température ambiante.

9. Procédé selon l'une des revendications 1 à 8, caractérisé par le fait que les granulés finis sont tamisés et que les fines particules et les poussières récupérées par filtration des courants d'air évacués sont recyclées à l'entrée de la zone de granulation.

10. Utilisation des granulés obtenus par le procédé selon une des revendications 1 à 9, dans des compositions détergentes pour lave-vaisselle.

11. Utilisation selon la revendication 10, caractérisée par le fait que la proportion en poids des granulés de l'invention dans lesdites compositions détergentes est de 20 à 70 %.

12. Utilisation selon la revendication 10, caractérisée par le fait que les granulés de l'invention sont introduits dans des compositions détergentes pour lave-vaisselle pouvant contenir

- 20 à 70 % en poids de granulés de métasilicate de sodium selon l'invention,
- 10 à 70 % en poids d'un phosphate ou polyphosphate de métal alcalin,
- 1 à 30 % en poids d'un ou des sels minéraux solubles,
- 0,2 à 3 % en poids d'un tensio-actif non ionique,
- 0,2 à 5 % en poids d'un composé à chlore libérable,
- 0,2 à 5 % en poids d'additifs tels : inhibiteur de corrosion, agent antimousses, agent antimottant, parfum, colorant,
- éventuellement de 0 à 50 % en poids d'un silico-aluminate naturel ou synthétique.

**Claims**

**Claims for the following Contracting States : BE, CH, DE, FR, GB, IT, LI, LU, NL, SE**

1. Pellets of sodium metasilicate formed of anhydrous sodium metasilicate and pentahydrated sodium metasilicate characterised in that they are composed of a central core of particles of anhydrous sodium metasilicate, said particles having dimensions of between 0,05 and 0,8 mm and being agglomerated with pentahydrated sodium metasilicate and said central core being surrounded by a peripheral layer of pentahydrated sodium metasilicate and the amount of water contained in the pentahydrated sodium metasilicate representing at least 10 to 25 % of the weight of the finished product.

2. Pellets according to the invention, characterised in that they contain from 73 to 88 % by weight of sodium metasilicate ($Na_2SiO_3$) and from 10 to 25 % by weight of water.

3. Pellets according to claim 2, characterised in that they contain from 12 to 22 % by weight of water.

4. Pellets according to one of claims 1 to 3, characterised in that they have an apparent density of from 0,95 to 1,20 $g/cm^3$.

5. A process for preparing the pellets set forth in one of claims 1 to 4, characterised in that:

- in a first region referred to as granulation region a sodium metasilicate liquor having a dry extract of from 30 to 58 % is sprayed on the surface of particles of anhydrous sodium metasilicate which are maintained in an agitated condition in the form of a rolling bed and the temperature of the pellets at the discharge of the granulation region is held between ambient temperature and 50 °C by sweeping the granulation region by a co-flow of air which is introduced at ambient temperature, the resident time of the particles in the granulation region being between 5 and 30 min.,
- in subsequent regions referred to a mature regions the pellets are subjected to a treatment during 30 to 60 minutes by means of a gaseous flow or counterflow so that the temperature of the pellets at the discharge of the maturing region is lower than 35 °C and so as to leave at least 10 to 25 % of water in said pellets and to cause the surface formation of pentahydrated sodium metasilicate.

6. A process according to claim 5, characterised in that the sodium metasilicate liquor is prepared in such a fashion that it has a dry extract of from 40 to 50 %.

7. A process according to one of claims 5 or 6, characterised in that the ratio by weight between the extract of the sodium metasilicate liquor and the total pellet is higher than 0,042.

8. A process according to claim 7, characterised in that the ratio by weight between the extract of the sodium metasilicate liquor and the total pellet varies from 0,042 to 0,34.

9. A process according to claim 8, characterised in that the ratio by weight between the extract of the sodium metasilicate liquor and the total pellet varies from 0,08 to 0,22.

10. A process according to claim 5, characterised in that the residence time of the particles in the granulation region is 15 min.

11. A process according to one of claims 5 to 10, characterised in that, in the maturing region, the pellets are maintained in an agitated condition in the form of a falling bed.

12. A process according to one of claims 5 to 11, characterised in that said temperature is obtained by sweeping the maturing region by a counterflow of air which is introduced at ambient temperature.

13. A process according to one of claims 5 to 12, characterised in that the finished pellets are sieved and that the fine particles and the dusts which are recovered by filtration of the currents of air which are discharged are recycled to the entry of the granulation region.

14. Use of the pellets described in one of claims 1 to 4, in detergent compositions for dishwashing.

15. Use according to claim 14, characterised in that the proportion by weight of the pellets of the invention in said detergent compositions is from 20 to 70 %.

16. Use according to claim 14, characterised in that the pellets of the invention are introduced into detergent compositions for dishwashing which may contain:

- from 20 to 70 % by weight of sodium metasilicate pellets according to the invention,
- from 10 to 70 % by weight of an alkali metal phosphate or polyphosphate,
- from 1 to 30 % by weight of one or more soluble mineral salts,
- from 0,2 to 3 % by weight of a non-ionic surface-active agent,
- from 0,2 to 5 % by weight of a compound containing chlorine which can be freed,
- from 0,2 to 5 % by weight of additives such as: corrosion inhibitor, antifoaming agent, anti-lumping agent, perfume, and colouring agent, and
- optionally from 0 to 50 % by weight of a natural or synthetic silico-aluminate.

**Claims for the following Contracting State : AT**

1. A process for preparing pellets of sodium metasilicate formed by anhydrous sodium metasilicate and pentahydrated sodium metasilicate and composed of a central core of particles of anhydrous sodium metasilicate, said particles having dimensions of between 0,05 and 0,8 mm and being agglomerated with pentahydrated sodium metasilicate and said central core being surrounded by a peripheral layer of pentahydrated sodium metasilicate and the amount of water contained in the pentahydrated sodium metasilicate representing at least 10 to 25 % of the weight of the finished product and the apparent density being between 0,95 and 1,20 $g/cm^3$, characterised in that:

- in a first region referred to as a granulation region a sodium metasilicate liquor having a dry extract of from 30 to 58 % is sprayed on the surface of particles of anhydrous sodium metasilicate which are maintained in an agitated condition in the form of a rolling bed and the temperature of the pellets at the discharge of the granulation region is held between ambient temperature and 50 °C by sweeping the granulation region by a co-flow of air which is introduced at ambient temperature, the residence time of the particles in the granulation region being between 5 and 30 min.,
- in subsequent regions referred to as maturing regions, the pellets are subjected to a treatment during 30 to 60 minutes by means of a gaseous flow or counterflow so that the temperature of the granules at the discharge of the maturing region is lower than 35 °C and so as to leave at least 10 to 25 % of water in said pellets and to cause the surface formation of pentahydrated sodium metasilicate.

2. A process according to claim 1, characterised in that the sodium metasilicate liquor is prepared in such a fashion that it has a dry extract of from 40 to 50 %.

3. A process according to one of claims 1 to 2, characterised in that the ratio by weight between the extract of the sodium metasilicate liquor and the total pellet is higher than 0,042.

4. A process according to claim 3, characterised in that the ratio by weight between the extract of the sodium metasilicate liquor and the total pellet varies from 0,042 to 0,34.

5. A process according to claim 4, characterised in that the ratio by weight between the extract of the sodium metasilicate liquor and the total pellet varies from 0,08 to 0,22.

6. A process according to claim 5, characterised in that the residence time of the particles in the granulation region is 15 min.

7. A process according to one of claims 1 to 6, characterised in that, in the maturing region, the pellets are maintained in an agitated condition in the form of a falling bed.

8. A process according to one of claims 1 to 7, characterised in that said temperature is obtained by sweeping the maturing region by a counterflow of air which is introduced at ambient temperature.

9. A process according to one of claims 1 to 8, characterised in that the finished pellets are sieved and that the fine particles and the dusts which are recovered by filtration of the currents of air which are discharged are recycled to the entry of the granulation region.

10. Use of the pellets produced by the process according to one of claims 1 to 9 in detergent compositions for dishwashing.

11. Use according to claim 10, characterised in that the proportion by weight of the pellets of the invention in said detergent compositions is from 20 to 70 %.

12. Use according to claim 10, characterised in that the pellets of the invention are introduced into detergent compositions for dishwashing which may contain:

- from 20 to 70 % by weight of sodium metasilicate pellets according to the invention,
- from 10 to 70 % by weight of an alkali metal phosphate or polyphosphate,
- from 1 to 30 % by weight of one or more soluble mineral salts,
- from 0,2 to 3 % by weight of a non-ionic surface-active agent,
- from 0,2 to 5 % by weight of a compound containing chlorine which can be freed,
- from 0,2 to 5 % by weight of additives such as: corrosion inhibitor, antifoaming agent, anti-lumping agent, perfume, and colouring agent, and
- optionally from 0 to 50 % by weight of a natural or synthetic silico-aluminate.

**Patentansprüche**

**Patentansprüche für folgende Vertragsstaaten : BE, CH, DE, FR, GB, IT, LI, LU, NL, SE**

1. Natriummetasilikatgranulat, bestehend aus wasserfreiem Natriummetasilikat und Natriummetasilikatpentahydrat, dadurch gekennzeichnet, daß es aus einem zentralen Kern von Partikeln von wasserfreiem Natriummetasilikat mit Größen zwischen 0,05 und 0,8 mm zusammengesetzt ist, die mit Natriummetasilikatpentahydrat agglomeriert sind, wobei der Kern von einer peripheren Schicht von Natriummetasilikatpentahydrat umgeben ist, und daß die in dem Natriummetasilikatpentahydrat enthaltene Wassermenge mindestens 10 bis 25 Gew.-% des fertigen Produktes beträgt.

2. Erfindungsgemäßes Granulat, dadurch gekennzeichnet, daß es 73 bis 88 Gew.-% Natriummetasilikat ($Na_2SiO_3$) und 10 bis 25 Gew.-% Wasser enthält.

3. Granulat nach Anspruch 2, dadurch gekennzeichnet, daß es 12 bis 22 Gew.-% Wasser enthält.

4. Granulat nach einem der Ansprüche 1 bis 3, dadurch gekennzeichnet, daß es eine Schüttdichte von 0,95 bis 1,20 $g/cm^3$ besitzt.

5. Verfahren zur Herstellung des in einem der Ansprüche 1 bis 4 beschriebenen Granulats, dadurch gekennzeichnet,

- daß man in einer ersten, sogenannten Granulationszone auf die Oberfläche der Teilchen von wasserfreiem Natriummetasilikat, die in Form eines rollenden Betts in Bewegung gehalten werden, eine Flüssigkeit von Natriummetasilikat mit einem Trockenextrakt von 30 bis 58 % zerstäubt und die Temperatur des Granulats am Ausgang der Granulationszone durch Spülen der Granulationszone mit einem bei Umgebungstemperatur zugeführten Luftstrom zwischen Umgebungstemperatur und 50°C hält, wobei die Verweilzeit der Teilchen in der Granulationszone zwischen 5 und 30 Minuten liegt.
- daß man in weiteren sogenannten Reifungszonen das Granulat einer Behandlung während 30 bis 60 Minuten mit einem Gasstrom oder mit einem Gasgegenstrom in der Weise unterzieht, daß die Temperatur des Granulats am Ausgang der Reifungszone unterhalb von 35 °C liegt, in dem genannten Granulat mindestens 10 bis 25 % Wasser belassen und an der Oberfläche Natriummetasilikatpentahydrat erzeugt wird.

6. Verfahren nach Anspruch 5, dadurch gekennzeichnet, daß die Natriummetasilikatflüssigkeit so hergestellt wird, daß sie einen Trockenextrakt von 40 bis 50 % besitzt.

7. Verfahren nach einem der Ansprüche 5 oder 6, dadurch gekennzeichnet, daß das Gewichtsverhältnis zwischen dem Extrakt der Natriummetasilikatflüssigkeit und dem Gesamtgranulat über 0,042 liegt.

8. Verfahren nach Anspruch 7, dadurch gekennzeichnet, daß das Gewichtsverhältnis zwischen dem Extrakt der Natriummetasilikatflüssigkeit und dem Gesamtgranulat zwischen 0,042 und 0,34 beträgt.

9. Verfahren nach Anspruch 8, dadurch gekennzeichnet, daß das Gewichtsverhältnis zwischen dem Extrakt der Natriummetasilikatflüssigkeit und dem Gesamtgranulat zwischen 0,08 und 0,22 beträgt.

10. Verfahren nach Anspruch 5, dadurch gekennzeichnet, daß die Verweilzeit der Teilchen in der Granulationszone 15 min beträgt.

11. Verfahren nach einem der Ansprüche 5 bis 10, dadurch gekennzeichnet, daß das Granulat in der Reifungszone in Form eines fallenden Betts in Bewegung gehalten wird.

12. Verfahren nach einem der Ansprüche 5 bis 11, dadurch gekennzeichnet, daß die genannte Temperatur erhalten wird, indem man die Reifungszone durch einen Luft-Gegenstrom bestreichen läßt, der bei Umgebungstemperatur eingeführt wird.

13. Verfahren nach einem der Ansprüche 5 bis 12, dadurch gekennzeichnet, daß das fertige Granulat gesiebt wird und daß die feinen Teilchen und die durch Filtration der abgezogenen Luftströme gewonnenen Stäube zum Eingang der Granulationszone zurückgeführt werden.

14. Verwendung des in einem der Ansprüche 1 bis 4 beschriebenen Granulats in Detergentienzusammensetzungen für Geschirrspülmittel.

15. Verwendung nach Anspruch 14, dadurch gekennzeichnet, daß die Menge des erfindungsgemäßen Granulats in den genannten Detergentienzusammensetzungen zwischen 20 und 70 Gew.-% beträgt.

16. Verwendung nach Anspruch 14, dadurch gekennzeichnet, daß das erfindungsgemäße Granulat in Detergentienzusammensetzungen für Geschirrspülmittel eingesetzt wird, die enthalten können:

- 20 bis 70 Gew.-% Natriummetasilikatgranulat gemäß der Erfindung,
- 10 bis 70 Gew.-% eines Alkaliphosphats oder -polyphosphats,

- 1 bis 30 Gew.-% von einem oder mehreren löslichen anorganischen Salzen,
- 0,2 bis 3 Gew.-% eines nichtionischen oberflächenaktiven Mittels,
- 0,2 bis 5 Gew.-% einer Verbindung, die freisetzbares Chlor enthält,
- 0,2 bis 5 Gew.-% Additive wie: Korrosionsinhibitor, Antischaummittel, Antiklumpungsmittel, Parfüm, Farbstoff,
- gegebenenfalls 0 bis 50 Gew.-% eines natürlichen oder synthetischen Silicoaluminats.

**Patentansprüche für folgenden Vertragsstaat : AT**

1. Verfahren zur Herstellung von Natriummetasilikatgranulat, das aus wasserfreiem Natriummetasilikat und Natriummetasilikatpentahydrat zusammengesetzt ist und aus einem zentralen Kern von Teilchen von wasserfreiem Natriummetasilikat mit Größen zwischen 0,05 und 0,8 mm besteht, wobei die Teilchen durch Natriummetasilikatpentahydrat agglomeriert sind und der zentrale Kern von einer peripheren Schicht von Natriummetasilikatpentahydrat umgeben ist, wobei der im Natriummetasilikatpentahydrat enthaltene Wasseranteil 10 bis 25 Gew.-% des fertigen Produkts ausmacht und die Schichtdicke 0,95 bis 1,20 $g/cm^3$ beträgt, dadurch gekennzeichnet,

   - daß man in einer ersten sogenannten Granulationszone auf die Oberfläche der Teilchen von wasserfreiem Natriummetasilikat, die in Form eines rollenden Betts in Bewegung gehalten werden, eine Flüssigkeit von Natriummetasilikat mit einem Trockenextrakt von 30 bis 58 % zerstäubt und die Temperatur des Granulats durch Spülen der Granulationszone mit einem bei Umgebungstemperatur zugeführten Luftstrom bei Umgebungstemperatur und 50°C hält, wobei die Verweilzeit der Teilchen in der Granulationszone zwischen 5 und 30 min liegt,
   - daß man in weiteren sogenannten Reifungszonen das Granulat einer Behandlung während 30 bis 60 min mit einem Gasstrom oder mit einem Gasgegenstrom in der Weise unterzieht, daß die Temperatur des Granulats am Ausgang der Reifungszone unterhalb von 35 °C liegt, in dem genannten Granulat mindestens 10 bis 25 °C Wasser belassen und an der Oberfläche Natriummetasilikatpentahydrat erzeugt wird.

2. Verfahren nach Anspruch 1, dadurch gekennzeichnet, daß die Natriummetasilikatflüssigkeit so hergestellt wird, daß sie einen Trockenextrakt von 40 bis 50 % besitzt.

3. Verfahren nach Anspruch 1 oder 2, dadurch gekennzeichnet, daß das Gewichtsverhältnis zwischen dem Extrakt der Natriummetasilikatflüssigkeit und dem Gesamtgranulat über 0,042 liegt.

4. Verfahren nach Anspruch 3, dadurch gekennzeichnet, daß das Gewichtsverhältnis zwischen dem Extrakt der Natriummetasilikatflüssigkeit und dem Gesamtgranulat zwischen 0,042 und 0,34 beträgt.

5. Verfahren nach Anspruch 4, dadurch gekennzeichnet, daß das Gewichtsverhältnis zwischen dem Extrakt der Natriummetasilikatflüssigkeit und dem Gesamtgranulat zwischen 0,08 und 0,22 beträgt.

6. Verfahren nach Anspruch 5, dadurch gekennzeichnet, daß die Verweilzeit der Teilchen in der Granulationszone 15 min beträgt.

7. Verfahren nach einem der Ansprüche 1 bis 6, dadurch gekennzeichnet, daß das Granulat in der Reifungszone in Form eines fallenden Betts in Bewegung gehalten wird.

8. Verfahren nach einem der Ansprüche 1 bis 7, dadurch gekennzeichnet, daß die genannte Temperatur erhalten wird, indem man die Reifungszone durch einen Luftgegenstrom bestreichen läßt, der bei Umgebungstemperatur eingeführt wird.

9. Verfahren nach einem der Ansprüche 1 bis 8, dadurch gekennzeichnet, daß das fertige Granulat gesiebt wird und daß die feinen Teilchen und die durch Filtration der abgezogenen Luftströme gewonnenen Stäube zum Eingang der Granulationszone zurückgeführt werden.

10. Verwendung des durch das Verfahren nach einem der Ansprüche 1 bis 9 erhaltenen Granulats in Detergentienzusammensetzungen für Geschirrspülmittel.

11. Verwendung nach Anspruch 10, dadurch gekennzeichnet, daß die Menge des erfindungsgemäßen Granulats in den genannten Detergentienzusammensetzungen zwischen 20 und 70 Gew.-% beträgt.

**12.** Verwendung nach Anspruch 10, dadurch gekennzeichnet, daß das erfindungsgemäße Granulat in Detergentienzusammensetzungen für Geschirrspülmittel eingesetzt wird, die enthalten können:

- 20 bis 70 Gew.-% Natriummetasilikatgranulat gemäß der Erfindung,
- 10 bis 70 Gew.-% eines Alkaliphosphats oder -polyphosphats,
- 1 bis 30 Gew.-% von einem oder mehreren löslichen anorganischen Salzen,
- 0,2 bis 3 Gew.-% eines nichtionischen oberflächenaktiven Mittels,
- 0,2 bis 5 Gew.-% einer Verbindung, die freisetzbares Chlor enthält,
- 0,2 bis 5 Gew.-% Additive wie Korrosionsinhibitor, Antischaummittel, Antiklumpungsmittel, Parfüm, Farbstoff,
- gegebenenfalls 0 bis 50 Gew.-% eines natürlichen oder synthetischen Silicoaluminats.